# EUROPEAN PATENT SPECIFICATION

(11) **EP 3 411 153 B1**
(45) Date of publication and mention of the grant of the patent: **08.01.2020**
(21) Application number: 17705966.4
(22) Date of filing: 01.02.2017
(51) Int. Cl.: B03B 9/06, B29B 17/00

(54) **PROCESS FOR PREPARING AUTOMOTIVE SHREDDER FIBRE RESIDUE PELLETS**
VERFAHREN ZUR HERSTELLUNG VON PELLETS AUS SHREDDERFASERABFALL VON FAHRZEUGEN
PROCÉDÉ DE PRÉPARATION DE GRANULÉS DE RÉSIDUS DE FIBRES DE DÉCHIQUETEUSE AUTOMOBILE

(30) Priority: 01.02.2016 NL 2016193
(43) Date of publication of application: 12.12.2018
(73) Proprietor: Arn Holding B.V., 1101 EE Amsterdam (NL)
(72) Inventor: VAN DE GREEF, Johannes Hendricus Theodorus, 1101 EE Amsterdam (NL); VAN DER LEEUW, Ronald Hendrik Peter Albert, 1101 EE Amsterdam (NL); VERBURG, Allard Sirach, 1101 EE Amsterdam (NL)
(74) Representative: EP&C
(86) International application number: PCT/NL2017/050063
(87) International publication number: WO 2017/135817

(56) References cited:
- EP-A2- 1 419 114
- DE-A1- 19 629 473
- DE-A1-102007 051 994

## Description

### Technical Field

The present invention relates to a process for the preparation of pellets from the fibrous fraction of Automotive Shredder Residue.

### Background Art

Automotive Shredder Residue or ASR is usually defined as the 15-25% of the mass of a car when it becomes an End of Life Vehicle (ELV), after de-pollution, dismantling, shredding of the hulk, and removal of the metal. ASR can be classified into "light fluff", "heavy fluff" and a mineral fraction. Light fluff and heavy fluff are both characterized by a high content of combustibles such as plastics, rubber and textile. A review on "Recycling plastics from automotive shredder residues", by A Buekens and X. Zhou, may be found in J. Mater. Cycles Waste Manag. (2014) 16:398-414. In this review also the mechanical recycling is discussed, whereby recyclate is produced. ASR will contain one or more thermoplastic fractions, both in the light fluff and in the heavy fluff. These thermoplastics may be re-melted and re-processed into products, via usual techniques such as injection moulding or extrusion.

In EP1333931, WO2009124650 and WO2009124651 a method that is often referred to as the VW-Sicon process is disclosed, as well as equipment for conditioning a light fraction that has been produced during the conditioning of low-metal scrap that is high in plastics. The cleaning of the light material fraction obtained after the separation, enables a very clean initial substance to be obtained, resulting in clearly improved material recycling and energy recovery. The light fraction may be submitted to the downstream method steps of size reduction, agglomeration, pelletizing or briquetting. Details on these downstream method steps are not disclosed. These method steps are also described in EP1419114, which discloses a method for the treatment of sludge.

Composite materials and shaped articles are known from EP2658704. This document relates to a process for the preparation of a composite material from a particulate binder material having an average particle size (D90) of from 15 to 850 pm and a fibrous material having a density of from 150 to 550 kg/m³, comprising the steps of blending the particulate binder material and the fibrous material, and subjecting the blended material to a curing step under increased temperature and pressure to obtain a composite material. The fibrous materials are the light fractions SLF (Shredder-Leichtfraktion); Rohflusen and/or Leichtflusen LF1 , LF2, and /or LF1 -LG disclosed in the above VW-Sicon references , and/or Shredderflusen as disclosed in DE-A-19755629. NL2005946 is a related case, wherein particulate polyisocyanurate and/or polyurethane foam is used as binder material. EP2764969 is another case. Again composite materials are prepared from a thermoplastic waste material and a fibrous waste material wherein both are components of ASR.

NL2013695 concerns the preparation of a fibre reinforced composite material from a fibrous shredder residue comprising at least one thermoplastic polymer and having a density of from 150 to 650 kg/m³, comprising the steps of: (a) subjecting the fibrous shredder material to shear sufficient and for a time sufficient to reduce the average particle size to at least half of the original average particle size, and (b) compacting the material through a die, to form a fibre reinforced composite material, structural or decorative sheet material, furniture material, and/or concrete sheeting material and/or sound deadening material.

Whereas "heavy fluff" may be recycled with some difficulty, recycling "light fluff", in particular the fraction with a bulk density of 150 kg/m³ or less is problematic in view of the very low density. Incineration is problematic as the incinerators are rarely on the same location where the light fluff is produced. Transport of the very voluminous light fluff is very inefficient. Moreover, mechanical recycling is problematic as the very voluminous light fluff cannot be efficiently fed to extruders. The problem in that case is twofold: The feed opening of extruders are not large enough to allow efficient feed of the voluminous light fluff. Moreover, special attention has to be paid to the degassing process.

Although in the VW-Sicon process the downstream method step of pelletizing has been suggested, no information has been provided. Preparing pellets from such inhomogeneous material is not simple. Moreover, pellets may be too weak and break. In this case, the pellets are mixed with large amounts of dust. This is disadvantageous when the pellets are used for energy recovery. Dust is particularly disadvantageous when the pellets are used in subsequent mechanical recycling (extrusion). The pellets may also be too hard. In this case the mechanical recycling, extrusion in particular, may be problematic. Producing pellets that are sufficiently hard to avoid breaking and sufficiently weak to crumble upon extrusion or similar mechanical recycling step is therefore highly desirable. The inventors set out to solve this problem related to the efficient handling of low density and therefore large volume of light fluff, whereas at the same time producing pellets that are hard enough to resist breaking and weak enough to crumble upon s subsequent mechanical recycling step.

### Summary of the Invention

The invention therefore provides a process as defined in claim 1, making use of a specific pellet mill.

### Figures

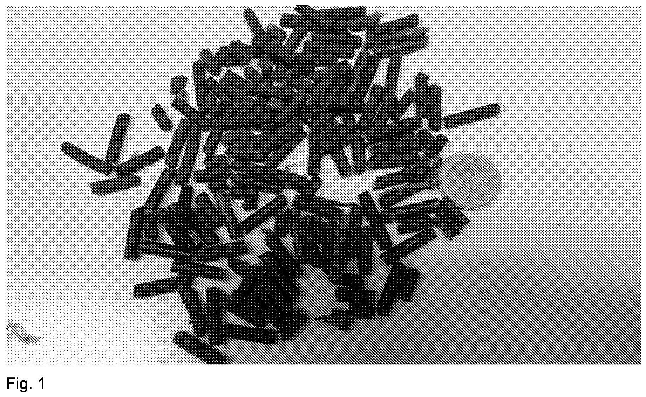

Fig. 1 is a picture of the pellets according to the present invention, produced in a pellet mill.

### Detailed description of the invention

Bulk density as discussed herein and in the claims, is determined according to the method described in NEN-EN 1097-3.
Although in principle any fibrous material may be used, the present invention is particularly suitable for the voluminous light fraction with a bulk density of 150 kg/m³ or less; preferably in the range of 10 to 150 kg/m³. This fibrous material will generally contain:
- more than 20 wt.% PUR foam,
- more than 20 wt.% cellulosic residue
- more than 5 wt.% textile,
- from 0.5 to 10, preferably from 1 to 5 wt.% rubber,
- from 5 to 20, preferably from 10 to 15 wt.% plastics (mostly thermoplasts),
- less than 10 , preferably less than 8 wt.% wood/paper,
- less than 5, preferably less than 2.5 wt.% metals/wires,
- less than 2.5, preferably less than 1 wt.% glass, and
- less than 2.5, preferably less than 1 wt.% soil/sand.

The plastic component will be a broad mixture of thermoplastic and thermosetting polymers. Up to 27 different types of plastics are currently encountered in ASR, the majority being polypropylene (PP), polyurethane (PU), polyvinylchloride (PVC), acrylonitrile butadiene styrene (ABS), polymethylmethacrylate (PMMA) and polyethylene terephthalate (PET).

Surprisingly, the inventors have found that the light fluff may be compacted significantly into pellets with a bulk density in the range of 250 to 1000 kg/m³ that can be more easily transported or used. The pellets so produced are relatively solid albeit still porous.

Pellet mills are known. They may have a feed opening on top with a horizontal die plate. Alternatively, they may have a feed opening on the side, with a cylindrical die plate having a horizontal axis. Pellet mills with a cylindrical die plate are preferred. In the process of the present invention they provide a better through-put and require less maintenance than pellet mills with a horizontal die plate. The pellets produced in a pellet mill with a cylindrical die plate moreover tend to have a lower moisture content.

The die plates of pellet mills that may be used to compact the light fluff have a plurality of die bores, i.e. generally the largest number of die bores whilst maintaining structural integrity of the die plate. The die bores have a diameter in the range of 4 to 10 mm, preferably in the range of, 5 to 8 mm and a length over diameter ratio in the range of 4 to 12, preferably in the range of 6 to 10. If the bore diameter is less than 4 mm, frictional forces may adversely impact the fibrous material. Moreover, the pellets may be too hard. This is particularly problematic if the pellets are used for mechanical recycling in the form of extrusion. The hard pellets will mix inefficiently with other materials, while retaining gas and volatile organic materials inside the pellets. A similar problem is encountered if the L/D ratio is greater than 12. If the diameter is larger than 10 mm than the pellets crumble too easily. As a result dust is generated. Dust is problematic as it is a reason for material loss, and it is often a cause for fluctuations in process conditions and product properties. A similar problem is encountered if the L/D ratio is less than 4.

The pellet mills have at least one roller, suitably 1 to 4 rollers, forcing the light fluff material through the die holes. These rolls may be plain, or provided with a suitable profile in the form of e.g., corrugates, bulges and recesses and the like. Preferably corrugated rolls are used for better grip. The fibrous material is preferably forced with a power in the range of 50 to 600 kW. If the power is less than 50 kW, then the pellets may crumble too easily. If the power is more than 600 kW, than the pellets may be too hard.

Whereas feed inlets of extruders generally are small, with diameters in the range of 2 to 15 cm, the feed inlets of pellet mills may be significantly larger. To ensure feeding of the light fluff proceeds quickly and efficiently, preferably a pellet mill is used having a feed inlet with a diameter of at least 45 cm. Of particular interest, since commercially available, are pellet mills with a diameter in the range of 70 to 120 cm.

In the process of the invention, it is advantageous to use a forced feeder to feed efficiently and quickly large volumes of the light fluff to the pellet mill. A suitable forced feeder comprises a funnel and an internal conveyor screw. Also conveyor belts may be used. The feeding may be further expedited by pressurized gas (air). In particular the combination of a ventilator/conveyor belt for pellet mills with a side feeder is very suitable.

In the process of the present invention, the pellet mills will be operated without additional heating or cooling. The temperature in the pellet mill may increase to temperatures in the range of 70-150 °C due to the friction of the light fluff. Care should be taken to ensure that the temperature will remain below the melt temperature of the thermoplastic fraction of the light fluff.

Pellets so produced may moreover be more easily dried than the light fluff. Light fluff may still contain significant amounts of moisture, often between 10 to 20 wt.% (depending on the season). This may be reduced to less than 10 wt.%, preferably less than 5 wt.%. This is advantageous both in the transport of the light fluff in pellet form as in its use (be it in incineration or in mechanical recycling).

Advantageously, the light fluff is dried in the pellet mill, but also in the subsequent cooling step. Suitably, the pellets are cooled and dried at the same time by air. Air may be passed over the pellets, still warm from the pellet mill, by suction. Of particular interest is the use of a cooling unit downstream of the pellet mill, wherein pellets are deposited in a container through which air flows. For instance, this may be a container equipped with a porous floor that may be opened and through which air may flow up, through the pellets on top of the floor. A ventilation system may be provided below the floor and/or a suction system may be provided at or close to the top of the container.

The use of the specific pellet mill is particularly suitable for compacting the light fluff. Also mixtures of materials comprising light fluff may be compacted in the pellet mill. For instance, the light fluff may be compressed together with material with high energetic value. This is advantageous if the pellets are subsequently used for the recovery of energy. Alternatively, the light fluff may be compressed together with materials that are valuable components in the subsequent mechanical recycling. For instance, virgin material or recycled materials may be mixed in case the pelletized material is subsequently used for articles made by extrusion. Of particular interest in this respect are pellets made comprising 100 to 50 wt.% fibrous material and 0 to 50 wt.% of other material, wherein the other material has high energetic value or use in a subsequent extrusion step. An interesting example of the latter embodiment would therefore be a pellet that is made of the light fluff from ASR, combined with the heavy fluff and/or plastic rich fraction of the ASR.

Suitable pellet mils include those with a cylindrical-shaped die offered by Pelleting Technology Nederland, types ranging from 580x146 to 1100x380, the Taurus DMT850-250-3; and many others. The diameter of cylindrical-shaped dies is suitably between 100 and 400 mm, suitably about 300 mm. Suitable pellet mills also include those with a feed opening on top, such as the KAHL Granulation press, built by the company Amandus Kahl, Germany.

### Examples

Shredder residue was made according to the VW-Sicon process from depolluted End of Life Vehicles combined with post-consumer scrap. By suction the shredder light fraction (SLF) is removed. From the residue ferro metal (magnet) and non-ferro metals are removed, resulting in a Shredder Heavy Fraction (SHF).
Both SLF and SHF are combined and ferro metal (magnet) is removed. Heavy parts are removed with the use of an airknife and fines are removed by screening. The product is treated with a Hammermill (40 mm) and fines are removed by screening.
The light fraction is subjected to a prall mill, resulting in pralled fiber 1-20 mm. Heavies < 8 mm are removed by screening and dust < 1 mm is removed by centrifuge. Ferro metal is removed (magnet), resulting in fibrous material in the form of light fluff.

This fibrous material contains on average:
- 23 wt.% PUR foam,
- 47 wt.% cellulosic residue
- 7 wt.% textile,
- 2 wt.% rubber,
- 11 wt.% plastics,
- 8 wt.% wood/paper,
- 2 wt.% metals/wires,
- less than 0.1 wt.% glass, and
- -less than 0.1 wt.% soil/sand.
(As analysed by SGS Intron, Sittard, Netherlands)

The loose bulk density of the fibrous material is determined according to NEN-EN 1097-3. For increased accuracy the bulk density was measured in a 161 barrel. Pursuant to this norm the fibrous material has a density of about 81 kg/m³.

The light fluff was then pelletized in a pellet mill with a cylindrical-shaped die plate with 300 mm diameter and a plurality of die bores having a diameter in the range of 6 mm and a length over diameter ratio in the range of 6.7. Pellets with a bulk density in the range of about 650 kg/m³ were obtained. Fig. 1 is a picture of the pellets so produced.

## Claims

1. Process for preparing automotive shredder fibre residue pellets, wherein fibrous automotive shredder residue having a bulk density of 150 kg/m³ or less that comprises at least one thermoplastic fraction is compacted to a bulk density of 250 to 1000 kg/m³ in a pellet mill at temperatures below the melt temperature of the thermoplastic fraction, wherein the fibrous automotive shredder residue is fed to the pellet mill and forced through a die plate with a plurality of die bores having a diameter in the range of 4 to 10 mm and a length over diameter ratio in the range of 4 to 12.

2. The process of claim 1, wherein the fibrous automotive shredder residue has a composition comprising:
- more than 20 wt.% PUR foam,
- more than 20 wt.% cellulosic residue
- more than 5 wt.% textile,
- from 0.5 to 10, preferably from 1 to 5 wt.% rubber,
- from 5 to 20, preferably from 10 to 15 wt.% plastics (mostly thermoplasts),
- less than 10 , preferably less than 8 wt.% wood/paper,
- less than 5, preferably less than 2.5 wt.% metals/wires,
- less than 2.5, preferably less than 1 wt.% glass, and
- less than 2.5, preferably less than 1 wt.% soil/sand.

3. The process of claims 1 or 2, wherein the fibrous automotive shredder residue is fed to the pellet mill and forced with a power in the range of 50 to 600 kW through the die plate.

4. The process of any one of claims 1 to 3, wherein the pellet mill has a feed inlet with a diameter of at least 45 cm, preferably in the range of 70 to 120 cm.

5. The process of any one of claims 1 to 4, wherein the pellet mill will operate without additional heating or cooling.

6. The process of any one of claims 1 to 5, wherein the pellet mill is equipped with a forced feeder.

## Patentansprüche

1. Verfahren zur Herstellung von Pellets aus Shredderfaserabfall von Fahrzeugen, wobei Shredderfaserabfall von Fahrzeugen mit einer Schüttdichte von 150 kg/m³ oder weniger, die mindestens eine thermoplastische Fraktion umfassen, in einer Pelletpresse bei Temperaturen unterhalb der Schmelztemperatur der thermoplastischen Fraktion auf eine Schüttdichte von 250 bis 1000 kg/m³ verdichtet wird, wobei der Shredderfaserabfall der Pelletpresse zugeführt und durch eine Matrizenplatte mit einer Vielzahl von Matrizenbohrungen mit einem Durchmesser im Bereich von 4 bis 10 mm und einem Längen-Durchmesser-Verhältnis im Bereich von 4 bis 12 gedrückt werden.

2. Verfahren nach Anspruch 1, wobei der Shredderfaserabfall von Fahrzeugen eine Zusammensetzung aufweist, die
- mehr als 20 Gewichts% PUR-Schaum,
- mehr als 20 Gewichts% Celluloserest
- mehr als 5 Gewichts% Textil,
- von 0,5 bis 10, vorzugsweise von 1 bis 5 Gewichts% Gummi,
- von 5 bis 20, vorzugsweise von 10 bis 15 Gewichts% Kunststoffe (hauptsächlich Thermoplaste),
- weniger als 10, vorzugsweise weniger als 8 Gewichts% Holz/Papier,
- weniger als 5, vorzugsweise weniger als 2,5 Gewichts% Metalle/Drähte,
- weniger als 2,5, vorzugsweise weniger als 1 Gewichts% Glas, und
- weniger als 2,5, vorzugsweise weniger als 1 Gewichts% Erde/Sand umfasst.

3. Verfahren nach einem der Ansprüche 1 oder 2, wobei der Shredderfaserabfall von Fahrzeugen der Pelletpresse zugeführt und mit einer Leistung im Bereich von 50 bis 600 kW durch die Matrizenplatte gedrückt wird.

4. Verfahren nach einem der Ansprüche 1 bis 3, wobei die Pelletpresse eine Aufgabeöffnung mit einem Durchmesser von mindestens 45 cm, vorzugsweise im Bereich von 70 bis 120 cm, aufweist.

5. Verfahren nach einem der Ansprüche 1 bis 4, wobei die Pelletpresse ohne zusätzliches Heizen oder Kühlen arbeitet.

6. Verfahren nach einem der Ansprüche 1 bis 5, wobei die Pelletpresse mit einer Zwangszuführung ausgestattet ist.

## Revendications

1. Procédé de préparation de granulés de résidu fibreux de déchiquetage d'automobiles, dans lequel le résidu fibreux de déchiquetage d'automobiles a une masse volumique apparente de 150 kg/m³ ou moins, comprend au moins une fraction thermoplastique, est compacté à une masse volumique apparente de 250 à 1000 kg/m³ dans une presse à granulés à des températures inférieures à la température de fusion de la fraction thermoplastique, dans lequel le résidu fibreux de déchiquetage d'automobiles est introduit dans la presse à granulés et forcé à travers une plaque de matrice comportant plusieurs alésages ayant un diamètre compris dans la plage allant de 4 à 10 mm et un rapport longueur sur diamètre compris dans la plage allant de 4 à 12.

2. Le procédé selon la revendication 1, dans lequel le résidu fibreux de déchiquetage d'automobile a une composition comprenant:
- plus de 20% en poids de mousse PUR,
- plus de 20% en poids de résidu cellulosique,
- plus de 5% en poids de textile,
- de 0,5 à 10%, de préférence de 1 à 5% en poids de caoutchouc,
- de 5 à 20%, de préférence de 10 à 15% en poids de matières plastiques (principalement des matières thermoplastiques),
- moins de 10%, de préférence moins de 8% en poids de bois/papier,
- moins de 5%, de préférence moins de 2,5% en poids de métaux/câbles,
- moins de 2,5%, de préférence moins de 1% en poids de verre, et
- moins de 2,5%, de préférence moins de 1% en poids de sol/sable.

3. Le procédé selon la revendication 1 ou 2, dans lequel le résidu fibreux de déchiquetage d'automobiles est introduit dans la presse à granulés et forcé avec une puissance comprise dans la plage allant de 50 à 600 kW à travers la plaque de matrice.

4. Le procédé selon l'une quelconque des revendications 1 à 3, dans lequel la presse à granulés a une entrée d'alimentation d'un diamètre d'au moins 45 cm, de préférence dans la plage allant de 70 à 120 cm.

5. Le procédé selon l'une quelconque des revendications 1 à 4, dans lequel la presse à granulés fonctionnera sans chauffage ni refroidissement supplémentaire.

6. Le procédé selon l'une quelconque des revendications 1 à 5, dans lequel la presse à granulés est équipée d'un alimentateur forcé.
